# EUROPÄISCHE PATENTSCHRIFT

(11) **EP 2 626 188 B1**
(45) Veröffentlichungstag und Bekanntmachung des Hinweises auf die Patenterteilung: **29.10.2014**
(21) Anmeldenummer: 13151543.9
(22) Anmeldetag: 16.01.2013
(51) Int. Cl.: B29C 47/90, B29C 47/92, B29C 47/08, B29C 47/22

(54) **Verstellbares Kalibrierverfahren**
Adjustable calibration method
Procédé de calibrage réglable

(30) Priorität: 08.02.2012 DE 102012101036
(43) Veröffentlichungstag der Anmeldung: 14.08.2013
(73) Patentinhaber: Binder, Manfred, 81375 München (DE)
(72) Erfinder: Binder, Manfred, 81375 München (DE); Schuster, Rudolf, 85551 Kirchheim (DE)

(56) Entgegenhaltungen:
- DE-U1- 20 219 089
- FR-A5- 2 086 713
- GB-A- 967 411
- GB-A- 1 469 646
- GB-A- 1 573 574
- GB-A- 2 182 603
- JP-A- S5 060 563
- US-A- 5 778 598

## Beschreibung

### Stand der Technik

Bei der Herstellung von Kunststoffschläuchen und Kunststoffrohren wird das extrudierte Material nachbehandelt um die endgültigen Abmessungen wie Durchmesser und Wandstärke im kalten Zustand mit den vorgegebenen Toleranzen zu erreichen.
Durch die Veränderung der Abzugsgeschwindigkeit ist die Wandstärke gut zu beeinflussen. Der Durchmesser kann mit Unterdruck in einer Kalibrierhülse aufgeweitet werden.

In der Vergangenheit wurden Kalibrierhülsen mit festen Abmessungen eingesetzt. Bei Durchmesserabweichungen musste die Fertigung unterbrochen werden, die Kalibrierhülse ausgetauscht und nach dem Produktionsanlauf eine weitere Überprüfung erfolgen.
Da aber in einem temperaturbeeinflussten Verfahren der eingeschwungene Zustand erst nach einer längeren Zeit erreicht wird, ist das Ziel einer Nachjustierung im laufenden Betrieb wünschenswert.

So wird z. B. bei EP 2052840 A2 durch Bänder in einer Art von Scherengittern ausgeführter Verstellmechanismus die Begrenzung in einer Vakuumkammer gelöst. Durch eine Vielzahl von Drehpunkten an den Kreuzungspunkten der Bänder und durch das Abdichtungsproblem der Vakuumkammer bei Veränderung des Durchmessers ist ein störanfälliges Gebilde entstanden.
Da die inneren Bänder die Begrenzung für den Aufweitvorgang darstellen und die Abmessung der Dicke nicht vernachlässigbar ist wird das verformbare Material in den Zwischenraum eingesaugt. Es entsteht eine vieleckige Form des Außenmantels.

EP 1157805 A1 verfügt über eine robuste Lösung, ist aber nur für kleine Durchmesserveränderungen geeignet.

Das Dokument GB 218 2603 A zeigt in Figur 3 eine Kalibriehülse bei der Kalibrierhülse (5), perforierte Hülse (6) und Formgebungsblock (10) feste Außenabmessungen haben ohne der Möglichkeit einer stufenlosen Durchmesserveränderung sondern durch Austausch der Teile mit Fertigungsunterbrechung.

GB967411A zeigt in Fig. 4 eine Vakuumdurchlaufdüse mit einem gemeinsamen Vakuumanschluss und mit verschiedenen Wärme- und Kältezonen. Eine stufenlose Durchmesserveränderungsmöglichkeit bei laufendem Betrieb ist aus der Fig. 4 nicht ersichtlich.

DE20219089U1 zeigt eine Unterdruckkammer mit integriertem Messsystem bei der ein Kühlmedium zur Außenseite des Schmelzstranges geführt wird und der Außendurchmesser nicht durch mechanische Begrenzung sondern durch Temperatur- und Unterdruckregelung erfolgt. Die Abdichtung am Auslauf der Unterdruckkammer ist nicht verstellbar, weshalb bei Durchmesserveränderung ein Fertigungsstillstand notwendig ist.

US5778598A beschreibt in Fig. 11 ein Umformsystem für plastisches Material welches eine runde Form in einen rechteckigen Querschnitt verändert. Auch quadratische und L-förmige Querschnitte sind möglich wodurch Umrüsten mit Teileaustausch notwendig wird.

Das Dokument GB 1573574 zeigt in Fig. 2 eine Folienherstelleinrichtung die das extrudierte Material über einen Körper (14) geführt und nach mehreren Unterdruckkammern die Folie produziert wird.
Bei Änderung des Außendurchmessers ist ein Austausch der Körpers (14) und damit eine Unterbrechung des laufenden Betriebes notwendig.

JP S 5060563A zeigt in Fig. 2 eine Kalibrierhülse mit verstellbarem Vakuumbereich (7) mit konstantem Aufweitwinkel (a) und einer Überleitung des kalibreiten Materials in ein Kühlbecken (6) wobei der Außendurchmesser des Kalibrierteils eine zylindrische Form aufweist und damit die Länge der Öffnungen nicht gleich sind, bzw. stufenartige Veränderungen aufweisen.
Bei der Veränderung des Durchmessers in einem weiteren Bereich ist auch die Wandstärke in einem weiteren Bereich anzupassen.
Ein Rohrkopf mit veränderlicher Wandstärke benötigt z. B. bei einem doppelten Außendurchmessers und einer doppelten Wandstärke zumindest eine vierfache Anfangswandstärke.
Fig. 1 zeigt eine Kalibrierung mit Innendruck im schlauchförmig extrudierten Materials.
Fig. 3 zeigt lediglich die Anfahrsituation mit Innendruck wie bei Fig. 1.

### Ziel der Erfindung

Ziel der Erfindung ist, die Bereitstellung eines Kalibrierverfahrens unter Verwendung einer im größeren Bereich verstellbaren Kalibrierhülse, die eine problemlose Beherrschung des Vakuums und eine geführte Aufweitung ermöglicht.

In der Praxis werden Extruderwerkzeuge eingesetzt, die eine Wandstärkenveränderung in größerem Umfang ermöglichen und die im laufenden Betrieb erfolgen kann.

Wird nun nach dem Extruderwerkzeug mit einer Dusche die Oberfläche des extrudierten Materials abgekühlt, entsteht eine ausreichende Stabilität der Außenschicht des Materials für den Transport durch die Kalibrierhülse und dem anschließenden Kühlvorgang auf Raumtemperatur.

Der Einlauf der Kalibrierhülse ist nur geringfügig größer als das extrudierte schlauchförmige Material, auf dessen Oberfläche noch ein Wasserfilm eine Abdichtung des Vakuums zum Einlauf hin bewirken kann.

Auch durch eine externe Kühlung ,bei der das Kühlmittel nicht direkt mit der Oberfläche des extrudierten Materials in Berührung kommt, ist möglich

Die Kalibrierhülse ist ein starres, rohrförmiges Gebilde mit einer Vielzahl von kleinen Öffnungen, die eine Verbindung herstellen zur inneren Bohrung, deren Innendurchmesser sich im Verlauf vergrößert.

Über die Öffnungen wirkt das außen angelegte Vakuum auf das noch verformbare schlauchförmige Material und weitet es bis zur Innenwand der inneren Bohrung auf.
Der Einwirkbereich des Vakuums ist durch die Veränderung der Position einer Abdichtung des Außendurchmessers der Kalibrierhülse veränderbar.
Wird nun der Einwirkbereich des Vakuums beendet, hört auch der Aufweitvorgang auf. Durch eine anschließende Abkühlung wird dieser Zustand fixiert.

Natürlich kann ein anschließender Schrumpfvorgang eine Nachjustierung des Vakuumbereiches erforderlich machen. Mit einer Durchmessererfassung im Anschluss der Kalibrierhülse, kann ein Regelkreis aufgebaut werden, wobei der Einwirkbereich des Vakuums angepasst wird.

Durch den Aufweitungswinkel des Innendurchmessers kann die Feinfühligkeit der Kalibrierhülse beeinflusst werden.
Ein kleiner Aufweitungswinkel führt zu langen Bauformen aber mit guten Durchmesserwerten.

Da in der Regel der Außendurchmesser des Endproduktes z. B. in 5 mm Schritten benötigt wird, kann eine stufenartige Veränderung des Innendurchmessers der Kalibrierhülse vorgenommen werden.

Auch Erfahrungswerte über anschließende Schrumpfungswerte im abgekühlten Zustand, können berücksichtigt werden und den Bereich, der die Maßhaltigkeit bestimmt, mit einem kleinen Aufweitungswinkel versehen werden.

Wird nun die Oberfläche in der Innenbohrung zwischen den Öffnungen und der Querschnitt der Öffnungen z. B. im Verhältnis 1:1 ausgelegt kann das Vakuum auf dieses Verhältnis eingestellt werden.
Findet z. B. aus örtlichen Temperaturunterschieden eine Ablösung des schlauchförmigen Materials von der Oberfläche der Innenwand der Kalibrierhülse statt, steht sofort die doppelte Ansaugfläche zur Verfügung, wodurch die Ablösung korrigiert wird.

Ein Drucksensor im Vakuumbereich ermöglicht es, die Drehzahl des Vakuumerzeugers auf den gewünschten Vakuumwert einzustellen und zu halten.

Neben dem konstanten Vakuum ist auch der eingeschwungene Temperaturzustand wichtig. Wird die Kalibrierhülse aus einem dünnwandigen Material mit einer geringen Masse hergestellt, verkürzt sich die Einschwingzeit auf die Betriebstemperatur.
Die Temperatur der Kalibrierhülse wird durch den Kontakt mit dem extrudierten Material beeinflusst.

Durch Zuluft, die über die Kalibrierhülse geleitet wird, oder durch einen Sprühnebel, ist eine Wärmeabführung möglich.
Eine Regelung der Zuluft wird über einen Temperatursensor für die Kalibrierhülse ermöglicht (z B. Infrarotsensor).

Außerhalb der Kalibrierhülse kann über optische Abstandsmesser der erzielte Durchmesser des aufgeweiteten schlauchförmigen Materials erfasst und mit einer kurzen Regelungstotzeit die Position der Abdichtung verändert werden.
Eine endgültige Maßerfassung ist sinnvoll im abgekühlten Zustand.

Das Exruderwerkzeug mit seinem Verstellbereich und der Aufweitbereich der Kalibrierhülse sollte aufeinander abgestimmt sein.

Ist die Oberfläche der Innenwand der Kalibrierhülse mit einer Antihaftbeschichtung versehen, wird damit die Reibung in der Kalibrierhülse reduziert. Daneben unterstützt der Aufweitungswinkel des Innendurchmessers eine reibungsarme Abzugsbewegung. Soll die Längendehnung durch Geschwindigkeitsunterschiede zwischen Abzugsgeschwindigkeit und Extruderföderung beeinflusst werden, tritt dies vor allem im Bereich höherer Temperatur des Kunststoffmaterials ein.

Die Verstellung des Vakuumbereiches kann über Führung und Gewindespindel oder über mehrere Gewindespindeln erfolgen, die dann auch die Führungseigenschaften übernehmen. Mit einer Positionserfassung können Produktionsdaten abgespeichert werden die kürzere Umrüstzeiten ermöglichen.

Die Abdichtung zur Vakuumkammer kann über einen Faltenbalg erfolgen oder durch elastische Dichtlippen

Bei dünnwandigen Kalibrierhülsen, bei denen auch der Außenmantel veränderlich ist, kann die Abdichtung über Lamellen erfolgen, die sich teilweise überdecken.
Eine dabei nicht auszuschließende Leckage kann zu einer zusätzlichen Abkühlung am Ende des Vakuumbereiches genutzt werden und mit Hilfe des Drucksensors, über den Luftdurchsatz des Vakuumerzeugers, kompensiert werden.

Das extrudierte schlauchförmige Material hat nach dem Austritt aus dem Extruderwerkzeug eine geringe Eigensteifigkeit. Durch einen minimierten Abstand zur Kalibrierhülse soll der freie Durchhang begrenzt werden.

Zum Anfahren der Produktion ist es sinnvoll die Kalibrierhülse mit einem Teil der Kühlung verfahrbar zu gestalten
Beim Anfahren der Produktion muss eine provisorische Verbindung zwischen Extruderwerkzeug und Abzug hergestellt werden.

Da der Eingangsdurchmesser der Kalibrierhülse nur geringfügig größer als der Außendurchmesser des extrudierten schlauförmigen Materials ist, darf die Verbindungsstelle nicht überstehen und einem Stau im Einlauf verursachen. Als Zugelement bieten sich z. B. zusammensteckbare Rohre oder Kunststoffschläuche an.

Die Ankoppelstelle am Anfang des Zugelements kann ein profilierter Dorn sein, über den der Anfang des extrudierten, schlauchförmigen Materials gefördert wird und wo mit Druck von außen, das plastifizierte Material auf den profilierten Dorn aufgedrückt wird.
Ist der Dorn aus Material mit guter Wärmeleitfähigkeit ausgeführt, erstarrt die Verbindungsstelle und fixiert die Verbindung. Die Abzugsgeschwindigkeit kann etwas höher als die Extruderförderungsgeschwindigkeit eingestellt werden, wodurch sich das extrudierte Material etwas einschnürt.

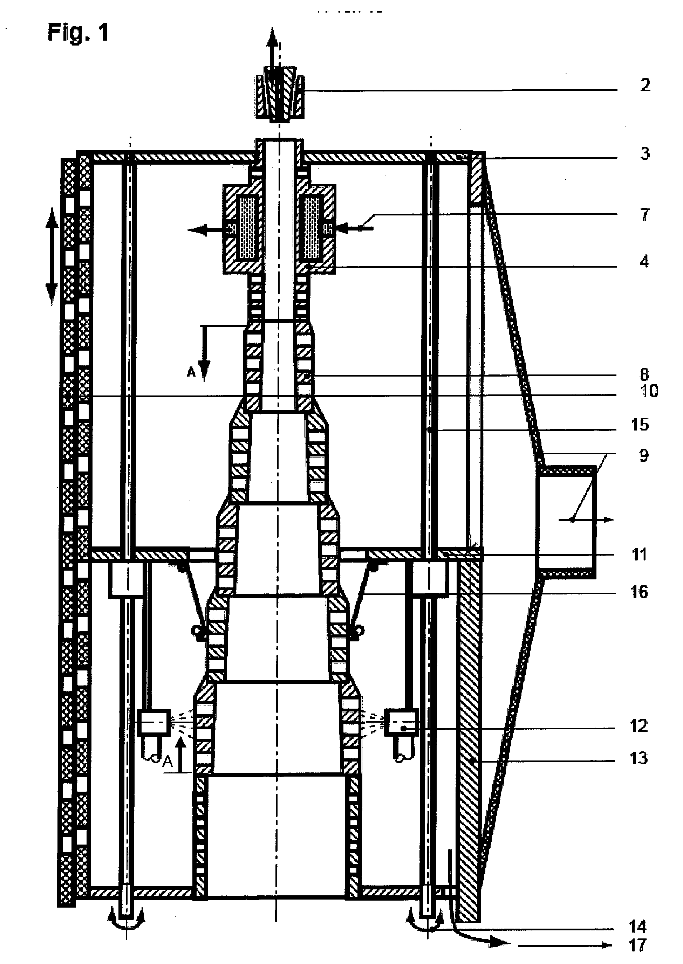

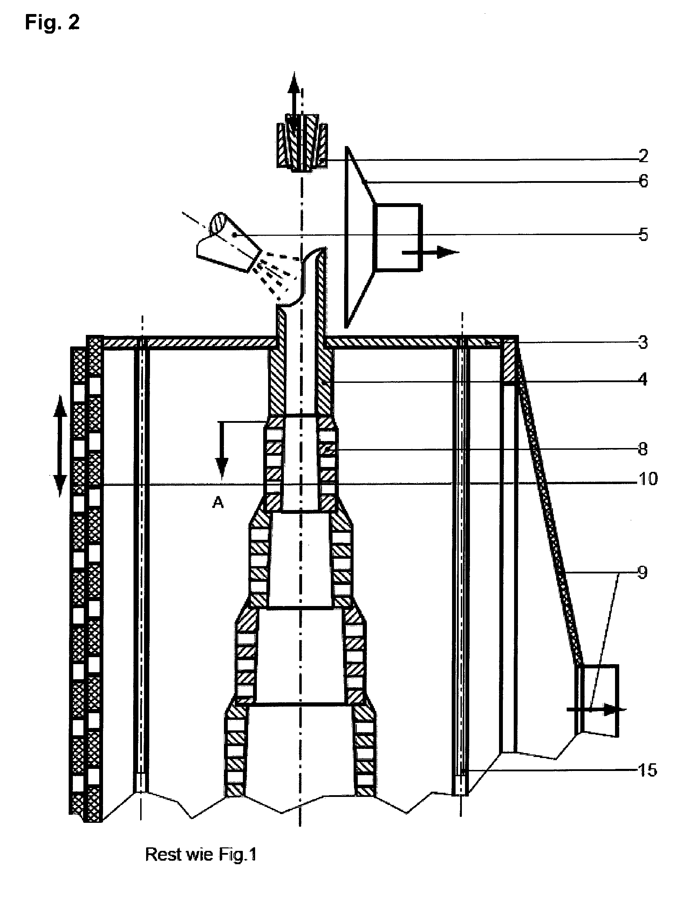

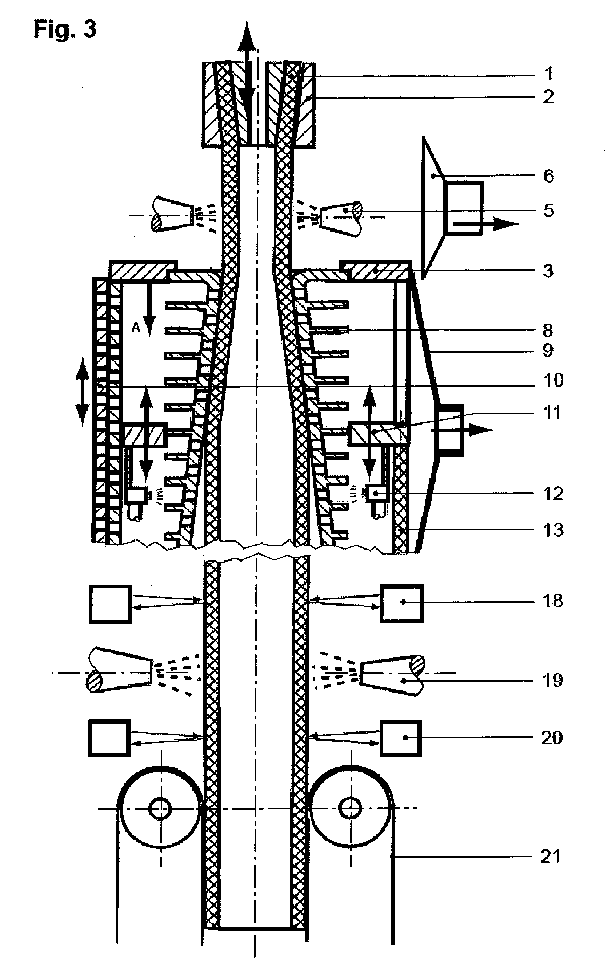

Die in Fig.3 dargestellte Kalibrierhülse mit umlaufenden Öffnungen nahe dem Innendurchmesser und aufgesetzte Lamellen benötigt für feinfühlige Durchmessereinstellung kleine Lamellenabstände.
Eine stufenlose Einstellung des Durchmessers lässt sich erreichen mit durchgängigen Öffnungen wie in Fig.1 und Fig.2 dargestellt, aber mit einer versetzten Abdichtlinie der verstellbaren Abdichtung entlang dem Umfang.

Ist dabei die Verteilung der Maximas und Minimas der Abdichtlinie so, dass einem Maximum ein Minimum auf der entgegengesetzten Seite der Kalibrierhülse angeordnet, wird das aufgeweitete Material eine Unrundheit aufweisen.
Durch mehrere Maximas und Minimas kann aber die Unrundheit in engen Grenzen gehalten werden.
Die Funktion ist auch umkehrbar mit einer versatzlosen Abdichtlinie und mit Maximas und Minimas versehene Lage der Öffnungen.

Vorteilhaft ist aber die kürzere Länge der Kalibrierungshülse da mit einem größerem Aufweitungswinkel gearbeitet werden kann.

### Erklärungen zu Fig.1, Fig.2 und Fig.3

1. Extrudiertes Material nur in Fig.3 dargestellt
2. Rohrkopf für verstellbare Wandstärke und zentrale Verbindung mit der Atmosphäre
3. Teil der Vakuumkammer
4. Einlaufteil für offene Kühlung bei Fig.1 und externer Kühlung bei Fig.2
5. Offene Kühlung
6. Auffang und Wasserabführung bei offener Kühlung bei Fig.2 und Fig.3
7. Externe Kühlung
8. Kalibrierhülse mit Aufweitung
   - Über die ganze Länge Fig. 3
   - Stufenweise Aufweitung Fig. 1 und Fig. 2
9. Abluft mit Drucksensor und Regelkreis für Vakuumsollwert
10. Verstellbare Zuluft zur Vakuumkammer zur Regulierung der Temperatur der Kalibrierhülse mit Hilfe eines Temperatursensors
11. Verstellbarer Abschluss der Vakuumkammer
12. Sprühdüsen an Teil 11 befestigt und am Umfang verteilt zur Abkühlung des aufgeweiteten Materials
13. Verstellbarer Abschluss der Vakuumkammer ist mit Teil 11 verbunden.
14. Verstellung des Vakuumbereiches z.B. mit Hilfe von zwei synchron angetriebenen Gewindespindeln nur in Fig.1 dargestellt
15. Gewindespindeln nicht in Fig.3 dargestellt.
16. Durchmesserverstellbare Abdichtung des Vakuums am Außendurchmesser der Kalibrierhülse z.B. durch überlappende Lamellen.
17. Wasserabfluss für das durch die Sprühdüsen zugeführte Wasser nur in Fig.1 dargestellt.
18. Durchmesserermittlung zur Reduzierung der Regelungstotzeit
19. Kühlstrecke zur Absenkung der Produkttemperatur
20. Endkontrolle des Produktes
21. Verstellbarer geschwindigkeitsgeregelter Abzug.
A Bereich mit aufgeweiteten Innendurchmesser

## Patentansprüche

1. Kalibrierverfahren in einer Vakuumkammer (3) unter Verwendung einer rohrförmigen Kalibrierhülse (8) die mit zahlreichen Öffnungen vom Außendurchmesser zur Innenwand versehen ist und deren Innendurchmesser im Verlauf auf einen Maximalwert ansteigt wobei, in der Vakuumkammer ein Unterdrück herrscht und auf das noch verformbare schlauchförmige Kunststoffmaterial einwirkt und dies bis zur Innenwand aufweitet
**dadurch gekennzeichnet, dass**
• der Einwirkbereich bzw. der Aufweitvorgang durch die Veränderung der Position einer Abdichtung am Außendurchmesser der Kalibrierhülse im laufenden Betrieb beendet wird und
• positionierbare Sprühdüsen (12) eine Kühlflüssigkeit durch die Öffnungen der Kalibrierhülse hindurch sprühen, die den aufgeweiteten Zustand fixiert.

2. Kalibrierverfahren nach Anspruch 1 **dadurch gekennzeichnet, dass** zur stufenlosen Veränderung des Außendurchmessers, mit einem Drucksensor im Vakuumbereich ein materialabhängiger Sollwert durch die Drehzahlanpassung des Vakuumerzeugers eingestellt wird.

3. Kalibrierverfahren nach Anspruch 1 **dadurch gekennzeichnet, dass** mit einem Temperatursensor an der Kalibrierhülse (8) einen materialabhängigen Sollwert durch die Veränderung des Lufteinlasses (10) eingestellt wird.

4. Kalibrierverfahren nach Anspruch 1 **dadurch gekennzeichnet, dass** vor der Kalibrierhülse (8) die Oberfläche des plastifizierten Schlauches mit einer Dusche (5) abgekühlt wird.

5. Kalibrierverfahren nach Anspruch 1 **dadurch gekennzeichnet, dass** vor der Kalibrierhülse (8) die Kühlung der Oberfläche des plastifizierten Schlauches durch eine externe Kühlung in einer durchflossenen Kühlkammer (7) erfolgt.

6. Kalibrierverfahren nach Anspruch 1 für die Kalibrierung eines extrudierten schlauchförmigen Kunststoffmaterials (1) über einen größeren Bereich im laufendem Betrieb und einer geführten Aufweitung **dadurch gekennzeichnet, dass**
• die Kalibrierhülse dünnwandig ausgeführt ist und
• die Öffnungen im Einwirkbereich gleiche Längen aufweisen.

7. Kalibrierverfahren nach Anspruch 1 **dadurch gekennzeichnet, dass** kleine Aufweitwinkel sich mit stufenartiger Veränderung des Innendurchmessers in den Bereichen ohne Endproduktabmessungen abwechseln.

8. Kalibrierverfahren nach Anspruch 1 **dadurch gekennzeichnet, dass** zumindest die innere Oberfläche der Kalibrierhülse (8) aus Antihaftmaterial besteht.

## Claims

1. Calibration method in a vacuum chamber (3) with the use of a tube shaped calibration cartridge (8) which is aimed with many holes from the outer diameter to the inner surface and the inner diameter shows a slope up to a maximum value at which there is lower pressure at the vacuum chamber which has an impact on the ductile plastics material and enlarges it to the inner surface **characterised in that**
• the impact area respectively the enlarging process is stopped by an adjustable sealing on the outer diameter of the calibration cartridge in the continuous production and
• adjustable spray nozzles (12) spray a cooling liquid through the wholes at the calibration cartridge which will fix the enlarging process.

2. Calibration method according to claim 1 **characterised in that** for a continuously change of the outer diameter with a pressure sensor in the vacuum area a material specific target value is adjusted by the control of the turns of the vacuum pump.

3. Calibration method according to claim 1 **characterised in that** with a temperature sensor on the calibration cartridge (8) a material specific target value is adjusted with an moveable air inlet (10).

4. Calibration method according to claim 1 **characterised in that** the surface of the ductile plastic tube is cooled with a shower (5) before the calibration clamp (8).

5. Calibration method according to claim 1 **characterised in that** with an external cooling the surface of the ductile plastic material is treated in a cooling chamber (7) before the calibration cartridge (8).

6. Calibration method according to claim 1 for the calibration of an extruded tube shaped material (1) on a wide area in the running production and a controlled enlargement **characterised in that**
• the calibration cartridge is thin walled and
• the openings in the impacted area have equal length.

7. Calibration method according to claim 1 **characterised in that** small enlarging angles change with step like changes of the inner diameter in the areas where no production diameters are required.

8. Calibration method according to claim 1 **characterised in that** at least the inner surface of the calibration cartridge (8) is made of non-sticking material.

## Revendications

1. La méthode de calibration dans une chambre à vide (3) à l'aide d'une chambre de calibration cylindrique (8) comportant de nombreux trous communiquant de l'extérieur vers la surface intérieure et le diamètre intérieur augmentant jusqu'à une valeur maximale à laquelle la pression est plus faible dans la chambre à vide ce qui a un impact sur le plastique mou et assure son expansion jusqu'à obtenir le contact avec la surface intérieure **caractérisé en ce que**
• la zone de contact étant atteinte le procédé d'expansion est arrété au moyen d'un joint réglable placé sur le diamètre extérieur de la chambre de calibration en production continue et
• des diffuseurs ajustables (12) pulvérisent un liquide de refroidissement au travers des trous de la chambre de calibration ce qui aura pour effet de bloquer l'état d'expansion.

2. La méthode de calibration relative au point 1 **caractérisée en ce que** pour un changement en continu du diamètre extérieur grâce à un capteur de pression placé dans la zone de vide une valeur cible spécifique à la matière est réglée en ajustant la vitesse de rotation de la pompe à vide.

3. La méthode de calibration relative au point 1 **caractérisée en ce que** grâce à un capteur de température placé sur la chambre de calibration (8) une valeur cible spécifique à la matière est ajustée grâce à un tuyau d'arrivée d'air mobile (10).

4. La méthode de calibration relative au point 1 **caractérisée en ce que** la surface du tube plastique mou est refroidie par un pulvérisateur (5) situé devant l'étranglement de calibration (8).

5. La méthode de calibration relative au point 1 **caractérisée en ce que** grâce à un refroidissement externe la surface du tube plastique mou est traitée dans une chambre de refroidissement (7) située devant la chambre de calibration (8).

6. La méthode de calibration relative au point 1 pour la calibration d'une matière cylindrique formée par extrusion (1) sur une gamme étendue de production en continu et un élargissement régulé **caractérisée en ce que**
• la chambre de calibration est légèrement renforcée et
• les ouvertures dans la zone impactée ont une longueur identique.

7. La méthode de calibration relative au point 1 **caractérisée en ce que** des angles d'élargissement faibles avec augmentation étagée du diamètre intérieur dans la zone où aucun diamètre n'est requis en production.

8. La méthode de calibration relative au point 1 **caractérisée en ce que** au minimum la surface interne de la chambre de calibration (8) est réalisée dans une matière non-adhésive.
